Europäisches Patentamt

European Patent Office

Office européen des brevets

(19)

(11) Numéro de publication: **0 257 666**
**B1**

(12) FASCICULE DE BREVET EUROPEEN

(45) Date de publication du fascicule du brevet:
23.05.90

(51) Int. Cl.⁵: **A23L 1/235, A23L 1/28**

(21) Numéro de dépôt: 87201148.1

(22) Date de dépôt: 16.06.87

(54) **Arome de truffe noire.**

(30) Priorité: 24.07.86 FR 8610871

(43) Date de publication de la demande:
02.03.88 Bulletin 88/9

(45) Mention de la délivrance du brevet:
23.05.90 Bulletin 90/21

(84) Etats contractants désignés:
AT BE CH DE ES FR GB GR IT LI LU NL SE

(56) Documents cités:
IT-A- 1 044 703

GIOVANNI FENAROLI: CRC FENAROLI'S HANDBOOK
OF FLAVOR
INGREDIENTS, 1971, pages 259,283,303,306,456,464,507,592, Chemical Rubber
Co., Cleveland, Ohio, US

(73) Titulaire: INSTITUT NATIONAL POLYTECHNIQUE DE
TOULOUSE (I.N.P.T.), Place des Hauts-Murats B.P. 354,
F-31006 Toulouse Cédex(FR)
Titulaire: PEBEYRE S.A., 66 rue Frédéric Suisse,
F-46000 Cahors(FR)

(72) Inventeur: Delmas, Michel, 30 Résidence des Amazones,
F-31320 Auzeville Tolosane(FR)
Inventeur: Gaset, Antoine, 75 allée de Brienne,
F-31000 Toulouse(FR)
Inventeur: Montant, Charles, 79 rue Fondeville,
F-31400 Toulouse(FR)
Inventeur: Pebeyre, Pierre-Jean, 87 rue du Potrinquat,
F-46000 Cahors(FR)
Inventeur: Talou, Thierry, 20 avenue de Rangueil,
F-31400 Toulouse(FR)

(74) Mandataire: Barre, Philippe, Cabinet
Barre-Gatti-Laforgue 95 rue des Amidonniers,
F-31069 Toulouse Cédex(FR)

## Description

L'invention concerne un procédé de fabrication d'un produit aromatique à odeur et goût de truffe noire ("tuber melanosporum"). Elle s'étend au produit aromatique ainsi fabriqué, destiné à parfumer des supports, solides ou liquides, en particulier dans le domaine alimentaire. Elle s'étend également aux corps aromatisés, parfumés au moyen dudit produit.

La truffe noire "tuber melanosporum" est un produit bien spécifique dont l'arôme n'a aucun rapport avec celui d'autres espèces de truffes (truffe blanche "tuber magnatum"...), l'arôme de la truffe noire étant le plus recherché en raison de ses qualités organoleptiques exceptionnelles.

A l'heure actuelle, les produits aromatiques appelés à conférer aux aliments le parfum ou le goût de la truffe noire sont essentiellement préparés, soit à partir de jus de truffes provenant de l'appertisation de truffes fraîches, soit par immersion de truffes fraîches dans des huiles alimentaires. Toutefois, l'on sait que la truffe noire est un produit exceptionnellement onéreux (2 500 francs français le kilogramme en 1986 à l'achat en terre sur les marchés) et les produits aromatiques ainsi obtenus sont eux-mêmes très chers. Au surplus, la sous-production croissante de truffes ne permet pas de satisfaire à toute la demande. En outre, dans le cas des jus obtenus par appertisation (cuisson en autoclave) l'arôme du produit final est sensiblement modifié par rapport à l'arôme des produits frais, lequel est le plus apprécié ; dans le cas d'immersion des truffes à froid dans une huile alimentaire, l'arôme initial est conservé mais la dégradation rapide de la truffe, ainsi immergée dans l'huile, oblige à utiliser le produit dans un laps de temps très court après préparation (de l'ordre de quinze jours), ce qui représente un inconvénient pratique majeur : un tel produit ne peut être conditionné industriellement et l'utilisateur doit lui-même le préparer peu de temps avant l'usage, et ce, bien entendu, uniquement pendant la période de production des truffes noires.

Par ailleurs, quelques produits de substitution ont été synthétisés pour permettre une aromatisation avec un parfum se rapprochant de celui de la truffe : "Truffle Flavor PG7474 ou 7074" vendu par la Société japonaise "TAKATA KORYO K.K." ou "Truffle Flavour" vendu par la Société anglaise "BUSH BOAKE ALLEN Ltd". Toutefois, il s'agit là de succédanés très imparfaits dont le parfum n'a qu'un rapport très lointain avec celui des produits aromatiques naturels sus-évoqués. En aucun cas, ces produits ne peuvent satisfaire la forte demande internationale de produits de qualité, capables de dégager un arôme reproduisant réellement celui de la truffe noire. En particulier en FRANCE, les professionnels, restaurateurs, trufficulteurs, conserveurs, rejettent radicalement ces succédanés qui ne peuvent donner le change à des connaisseurs.

La présente invention se propose de fournir un nouveau procédé de fabrication d'un produit aromatique à odeur et goût de truffe noire ("tuber melanosporum"), ne faisant pas appel au produit naturel lui-même de façon à écarter toutes les contraintes associées à l'utilisation de ce produit naturel, tout en conférant au produit aromatique obtenu une remarquable fidélité dans la reproduction des caractéristiques organoleptiques de l'arôme de truffe noire fraîche.

Un objectif essentiel de l'invention est ainsi de fabriquer un produit aromatique stable à odeur et goût de truffe noire fraîche, se prêtant à un conditionnement industriel sans altération de qualité, et à une distribution en tout période de l'année.

Un autre objectif essentiel est de fournir un produit aromatique dont la qualité soit apte à satisfaire les connaisseurs et professionnels.

Un autre objectif est de permettre de réaliser cette fabrication à partir de produits courants, peu onéreux, dont la production ne comporte aucune limite, afin de permettre de satisfaire à toutes les demandes à un coût raisonnable.

A cet effet, le procédé conforme à l'invention de fabrication d'un produit aromatique à odeur et goût de truffe noire consiste, dans son mode de mise en oeuvre de base, à associer les deux composés de base suivants : diméthylsulfure et méthyl-2 butanal.

Le diméthylsulfure étant considéré comme le composé de référence, l'autre composé de base ci-dessus indiqué est de préférence mélangé dans les proportions pondérales suivantes : entre 0,3 et 3 fois le poids du composé de référence.

Le produit aromatique conforme à l'invention peut être fabriqué sous forme concentrée, en mélangeant directement les composés en proportions appropriées. Toutefois, pour permettre une utilisation directe et plus facile du produit, ces composés sont de préférence dilués dans un solvant alimentaire ou un vecteur liquide non toxique à volatilité élevée, apte à les disperser en milieu homogène ou hétérogène.

On peut en particulier utiliser comme solvant une huile alimentaire afin d'obtenir un produit aromatique se prêtant à une utilisation directe par le consommateur, notamment pour parfumer des aliments au moment de leur préparation. On peut aussi utiliser comme solvant de l'eau afin d'obtenir une eau aromatisée (glace à l'arôme de truffe...) ou de l'éthanol pour obtenir une boisson alcoolisée à l'arôme de truffe.

On peut aussi utiliser comme vecteur volatil du protoxyde d'azote ou du trichlorofluorométhane afin notamment de réaliser des imprégnations industrielles de supports solides (supports alimentaires tels que beurre ou autres supports tels que papiers imprégnés directement ou par micro-encapsulation).

Dans le cas le plus courant d'un usage alimentaire, le rapport pondéral de dilution des composés est avantageusement compris entre 50 et 10 000.

On a pu constater que le mélange des deux composés de base sus-évoqués dégage un parfum et possède un goût rappelant ceux de la truffe noire fraîche ("tuber melanosporum"). Il est à noter que chacun des deux composés, pris individuellement, conduit à un parfum totalement inexploitable, l'un (le diméthylsulfure) possédant un arrière-goût soufré marqué, très désagréable, l'autre possédant une note fruitée sans rapport avec le parfum de la truffe noire : il est totalement inattendu d'obtenir un résultat aussi remarquable en mélangeant ces deux composés ; il semble que le goût inapproprié du diméthylsulfure soit corrigé par le méthyl-2 butanal de sorte que la combinaison des deux fournit un produit aromatique bénéficiant d'un parfum et d'un goût satisfaisants. Les composés utilisés sont des composés courants commerciaux, peu onéreux, qui confèrent au procédé de préparation un prix de revient considérablement réduit par rapport à ceux utilisant des truffes noires naturelles. De plus, les essais ont démontré que ce mélange était stable et ne perdait pas, de façon sensible, ses propriétés organoleptiques au terme de longues périodes de conservation.

Le produit aromatique de base ci-dessus décrit fournit donc un succédané satisfaisant de l'arôme naturel de truffe noire, et sa qualité aromatique est très supérieure à celle des produits de substitution existants.

Il est possible d'améliorer cette qualité aromatique au prix d'une légère augmentation des coûts, en associant aux deux composés de base sus-évoqués l'un ou plusieurs des cinq composés additionnels suivants :
- acétaldéhyde, de préférence en proportion pondérale comprise entre 0,4 et 4 fois le poids du composé de référence (diméthylsulfure),
- méthyl-2 propanal, de préférence en proportion pondérale comprise entre 0,5 et 5 fois le poids du composé de référence,
- butanone-2, de préférence en proportion pondérale comprise entre 0,3 et 3 fois le poids du composé de référence,
- méthyl-2 propanol, de préférence en proportion pondérale comprise entre 1 et 5 fois le poids du composé de référence,
- méthyl-2 butanol, de préférence en proportion pondérale comprise entre 1 et 5 fois le composé de base.

Les essais menés en panel dégustation ont montré que l'adjonction de ces composés améliorait sensiblement la qualité du produit aromatique conforme à l'invention, dont l'arôme et le goût se rapprochent ainsi davantage encore de ceux du produit naturel. En particulier, les cinq composés additionnels sus-évoqués peuvent être tous les cinq combinés aux deux composés de base pour donner un produit de très bonnes qualités. Pour la plupart des consommateurs courants, l'arôme dégagé par ce produit et son goût semblent difficiles à distinguer de ceux des truffes fraîches naturelles. Toutefois, les connaisseurs parviennent encore à faire la distinction dans la majorité des essais effectués, tout en reconnaissant la bonne qualité du produit.

Selon la présente invention, le produit peut être encore amélioré jusqu'à une parfaite imitation de l'arôme de truffes noires fraîches, en associant aux composés de base et composés additionnels sus-évoqués, un ou plusieurs composés du groupe suivant : propanal, anisole, acétone, propanol-1, butanol-2, éthanol.

Ce ou ces composés sont avantageusement prévus en proportions pondérales suivantes par rapport au composé de référence (diméthylsulfure) :
- propanal entre 0,01 et 0,5 ,
- anisole entre 0,01 et 0,5 ,
- acétone entre 0,5 et 2,
- propanol-1 entre 0,1 et 1,
- butanol-2 entre 0,01 et 0,1,
- éthanol entre 1 et 10.

L'invention s'étend également aux corps aromatisés obtenus en incorporant un produit aromatique tel que ci-dessus visé. Ce corps aromatisé comprend un support solide ou liquide sur lequel est adsorbé du diméthylsulfure, du méthyl-2 butanal, et avantageusement de l'acétaldéhyde, du méthyl-2 propanal, de la butanone 2, du méthyl-2 propanol et du méthyl-2 butanol et accessoirement du propanal, de l'anisole, de l'acétone, du propanol-1, du butanol-2, ou de l'éthanol.

## Exemple 1

Dans 0,1 litre d'huile de tournesol, on mélange en premier lieu $5.10^{-6}$ litre de diméthylsulfure pur sous agitation. Ensuite, $5.10^{-6}$ litre de méthyl-2 butanal sont ajoutés toujours sous agitation.

On obtient un produit aromatique dilué dans lequel les deux composés sont en rapport pondéral relatif égal à 1, avec un rapport pondéral de dilution dans l'huile égal à 10 000.

Un test de dégustation auprès de trufficulteurs a conduit à l'appréciation suivante : bon goût, mais un peu plat avec une note soufrée légèrement trop accentuée, bonne base pour aromatiser de façon honorable des aliments tels que salades, pommes de terre, viandes...

## Exemple 2

Dans 0,1 litre d'huile de tournesol, on mélange successivement en agitant :
- $5.10^{-6}$ l. de diméthylsulfure (composé de référence),
- $5.10^{-6}$ l. de méthyl-2 butanal (rapport pondéral par rapport au composé de référence : 1),
- $10.10^{-6}$ l. d'acétaldéhyde (rapport : 2). Le rapport pondéral de dilution de ce produit aromatique est de 5 000.

Le test de dégustation a donné l'apréciation suivante : arôme plus riche que le précédent, légère odeur de terre accentuant le "naturel" du produit ; la note soufrée quoique réduite est encore présente et supérieure à celui de l'arôme de truffe noire.

## Exemple 3

Dans 0,1 litre d'huile de tournesol, on mélange successivement en agitant :
- $5.10^{-6}$ l. de diméthylsulfure,
- $5.10^{-6}$ l. de méthyl-2 butanal (rapport pondéral avec le composé de référence : 1),
- $10.10^{-6}$ l. d'acétaldéhyde (rapport : 2),
- $8.10^{-6}$ l. de méthyl-2 propanal (rapport : 1,6),
- $3.10^{-6}$ l. de butanone-2 (rapport : 0,6),
- $10.10^{-6}$ l. de méthyl-2 propanol (rapport 2),
- $10.10^{-6}$ l. de méthyl-2 butanol (rapport 10).

Le rapport pondéral de dilution de ce produit est égal à environ 2 000.

Le test de dégustation a donné l'appréciation suivante : arôme et goût constituant une bonne reproduction de l'arôme et du goût de la truffe noire fraîche ; la note soufrée est bonne et reproduit fidèlement celle de l'huile de truffe naturelle ; une légère odeur d'amande amère ressort et, quoique non désagréable, paraît légèrement plus forte que celle de la truffe. La distinction de ce produit aromatique avec une huile obtenue à partir de truffes naturelles n'est pas évidente.

Exemple 4

Dans 0,1 litre d'huile de tournesol, on mélange successivement en agitant :
- 5.10⁻⁶ l. de diméthylsulfure,
-5.10⁻⁶ l. de méthyl-2 butanal (rapport pondéral avec le composé de référence : 1),
- 10.10⁻⁶ l. d'acétaldéhyde (rapport : 2), - 8.10⁻⁶ l. de méthyl-2 propanal (rapport : 1,6),
- 3.10⁻⁶ l. de butanone-2 (rapport : 0,6),
- 10.10⁻⁶ l. de méthyl-2 propanol (rapport 2),
- 10.10⁻⁶ l. de méthyl-2 butanol (rapport 10).
- 0,1.10⁻⁶ l. de propanal (rapport : 0,02),
- 0,1.10⁻⁶ l. d'anisole (rapport : 0,02),
- 5.10⁻⁶ l. d'acétone (rapport : 1),
- 2.10⁻⁶ l. de propanal-1 (rapport : 0,4),
- 0,2.10⁻⁶ l. de butanol-2 (rapport ; 0,04),
- 15.10⁻⁶ l. d'éthanol (rapport : 3).
Le rapport pondéral de dilution du produit est égal à environ 1 400.
Le test de dégustation a donné l'appréciation suivante : ce produit a beaucoup plus de force, les diverses composantes de l'arôme étant exaltées par rapport au produit précédent ; il réalise une très bonne reproduction de l'arôme de truffe et doit probablement garder ses qualités lorsqu'il est ajouté à un aliment faisant l'objet d'une cuisson même prolongée.

Exemple 5

Un produit aromatique préparé conformément à l'exemple 4 est disposé dans une boîte métallique sertie. La boîte est stockée à l'air ambiant durant 2 mois (température de l'ordre de 20°C).
Après réouverture, un test de dégustation conduit aux mêmes conclusions que celles de l'exemple 4, ce qui démontre la bonne stabilité du produit.

**Revendications**

1/ - Procédé de fabrication d'un produit aromatique à odeur et goût de truffe noire ("tuber melanosporum"), caractérisé en ce qu'il consiste à associer les deux composés de base suivants : diméthylsulfure et méthyl-2 butanal.

2/ - Procédé de fabrication selon la revendication 1, caractérisé en ce que le méthyl-2 butanal est prévu dans une proportion pondérale comprise entre 0,3 et 3 fois le poids de diméthylsulfure, considéré comme composé de référence.

3/ - Procédé de fabrication selon l'une des revendications 1 ou 2, caractérisé en ce que l'on associe aux composés de base, le composé additionnel suivant : acétaldéhyde.

4/ - Procédé de fabrication selon l'une des revendications 1 ou 2, caractérisé en ce que l'on associe aux composés de base, le composé additionnel suivant : méthyl-2 propanal.

5/ - Procédé de fabrication selon l'une des revendications 1, 2 ou 3, caractérisé en ce que l'on associe aux composés de base, le composé additionnel suivant : butanone-2.

6/ - Procédé de fabrication selon l'une des revendications 1, 2, 3 ou 4, caractérisé en ce que l'on associe aux composés de base, le composé additionnel suivant : méthyl-2 propanal.

7/ - Procédé de fabrication selon l'une des revendications 1, 2, 3, 4, ou 5, caractérisé en ce que l'on associe aux composés de base, le composé additionnel suivant : méthyl-2 butanol.

8/ - Procédé de fabrication selon les revendications 3, 4, 5, 6 et 7 prises ensemble, caractérisé en ce que :
- l'acétaldéhyde est prévu dans une proportion pondérale comprise entre 0,4 et 4 fois le poids du composé de référence,
- le méthyl-2 propanal est prévu dans une proportion pondérale comprise entre 0,5 et 5 fois le poids du composé de reférénce,
- la butanone -2 est prévue dans une proportion pondérale comprise entre 0,3 et 3 fois le poids du composé de référence,
- le méthyl-2 propanol est prévu dans une proportion pondérale comprise entre 1 et 5 fois le poids du composé de référence,
- le méthyl-2 butanol est prévu dans une proportion pondérale comprise entre 1 et 5 fois le poids du composé de référence.

9/ - Procédé de fabrication selon l'une des revendications précédentes, caractérisé en ce que l'on associe également aux composés de base et éventuellement composés additionnels, un ou plusieurs des composés du groupe suivant : propanal, anisole, acétone, propanol-1, butanol-2, éthanol.

10/ - Procédé de fabrication selon la revendication 9, caractérisé en ce que le ou les composés précités sont prévus en proportions pondérales suivantes par rapport au composé de référence :
- propanal entre 0,01 et 0,5 ,
- anisole entre 0,01 et 0,5 ,
- acétone entre 0,5 et 2,
- propanol-1 entre 0,1 et 1,
- butanol-2 entre 0,01 et 0,1,
- ethanol entre 1 et 10.

11/ - Procédé de fabrication selon l'une des revendications 1 à 10, caractérisé en ce que les composés sont dilués dans un solvant alimentaire apte à les disperser en milieu homogène ou hétérogène, en particulier huile alimentaire, eau, éthanol.

12/ - Procédé de fabrication selon l'une des revendications 1 à 10, caractérisé en ce que les composés sont dilués dans un vecteur liquide non toxique à volatilité élevée, apte à les disperser en milieu homogène ou hétérogène, en particulier protoxyde d'azote ou trichlorofluorométhane.

13/ - Procédé selon l'une des revendications 11 ou 12, en vue de la fabrication d'un produit aromatique à usage alimentaire, caractérisé en ce que les composés sont dilués dans le solvant ou le vecteur liquide, avec un rapport pondéral de dilution compris entre 50 et 10 000.

14/ - Procédé de fabrication selon l'une des revendications 11, 12 ou 13, caractérisé en ce que les composés sont incorporés individuellement dans le solvant ou le vecteur liquide sous agitation.

15/ - Produit aromatique à odeur et goût de truffe noire, caractérisé en ce qu'il comprend, sous forme concentrée, du diméthylsulfure, de méthyl-2 butanal, et avantageusement de l'acétaldéhyde, du méthyl-2 propanal, de la butanone-2, du méthyl-2 propanol et du méthyl-2 butanol.

16/ - Produit aromatique selon la revendication 15, caractérisé en ce qu'il comprend également, sous forme concentrée, un ou plusieurs des composés du groupe suivant : propanal, anisole, acétone, propanol-1, butanol-2, éthanol.

17/ - Produit aromatique à odeur et goût de truffe noire, caractérisé en ce qu'il comprend, dilués dans un solvant alimentaire ou dans un vecteur liquide à volatilité élevée, du diméthylsulfure, du méthyl-2 butanal, et avantageusement de l'acétaldéhyde, du méthyl-2 propanal, de la butanone-2, du méthyl-2 propanol et du méthyl-2 butanol.

18/ - Produit aromatique selon la revendication 17, caractérisé en ce qu'il comprend également, dilués dans le solvant ou le vecteur liquide, un ou plusieurs des composés du groupe suivant : propanal, anisole, acétone, propanol-1, butanol-2, éthanol.

19/ - Corps aromatisé dégageant une odeur de truffe noire, caractérisé en ce qu'il comprend un support solide ou liquide sur lequel est adsorbé du diméthylsulfure, du méthyl-2 butanal, et avantageusement de l'acétaldéhyde, du méthyl-2 propanal, de la butanone-2, du méthyl-2 propanol et du méthyl-2 butanol.

20/ - Corps aromatisé selon la revendication 19, caractérisé en ce que sur le support sont également adsorbés un ou plusieurs des composés suivants : propanal, anisole, acétone, propanol-1, butanol-2, éthanol.

**Patentansprüche**

1. Verfahren zur Herstellung eines aromatischen Produkts mit dem Geruch und Geschmack von Schwarztrüffel ("tuber melanosporum"), dadurch gekennzeichnet, daß es in der Verknüpfung der folgenden beiden Grundverbindungen: Dimethylsulfid und Methyl-2-Butanal besteht.

2. Herstellungsverfahren nach Anspruch 1, dadurch gekennzeichnet, daß das Methyl-2-Butanal in einem Gewichtsverhältnis zwischen 0,3 und 3 mal dem Gewicht des als Bezugsverbindung erachteten Dimethylsulfids vorgesehen wird.

3. Herstellungsverfahren nach einem der Ansprüche 1 oder 2, dadurch gekennzeichnet, daß man den Grundverbindungen die folgende zusätzliche Verbindung verknüpft: Acetaldehyd.

4. Herstellungsverfahren nach einem der Ansprüche 1 oder 2, dadurch gekennzeichnet, daß man mit den Grundverbindungen die folgende zusätzliche Verbindung verknüpft: Methyl-2-Propanal.

5. Herstellungsverfahren nach einem der Ansprüche 1, 2 oder 3, dadurch gekennzeichnet, daß man mit den Grundverbindungen die folgende zusätzliche Verbindung verknüpft: Butanon-2.

6. Herstellungsverfahren nach einem der Ansprüche 1, 2, 3 oder 4, dadurch gekennzeichnet, daß man mit den Grundverbindungen die folgende zusätzliche Verbindung verknüpft: Methyl-2-Propanol.

7. Herstellungsverfahren nach einem der Ansprüche 1, 2, 3, 4 oder 5, dadurch gekennzeichnet, daß man mit den Grundverbindungen die folgende zusätzliche Verbindung verknüpft: Methyl-2-Butanol.

8. Herstellungsverfahren nach den Ansprüchen 3, 4, 5, 6 und 7 gemeinsam, dadurch gekennzeichnet, daß:
– das Acetaldehyd in einem Gewichtsverhältnis zwischen 0,4 und 4 mal dem Gewicht der Bezugsverbindung vorgesehen wird,
– das Methyl-2-Propanal in einem Gewichtsverhältnis zwischen 0,5 und 5 mal dem Gewicht der Bezugsverbindung vorgesehen wird,
– das Butanon-2 in einem Gewichtsverhältnis zwischen 0,3 und 3 mal dem Gewicht der Bezugsverbindung vorgesehen wird,
– das Methyl-2-Propanol in einem Gewichtsverhältnis zwischen 1 und 5 mal dem Gewicht der Bezugsverbindung vorgesehen wird,
– das Methyl-2-Butanol in einem Gewichtsverhältnis zwischen 1 und 5 mal dem Gewicht der Bezugsverbindung vorgesehen wrid.

9. Herstellungsverfahren nach einem der vorstehenden Ansprüche, dadurch gekennzeichnet, daß man mit den Grundverbindungen und etwaigen Zusatzverbindungen auch eine oder mehrere Verbindungen der folgenden Gruppe verknüpft: Propanal, Anisol, Aceton, Propanol-1, Butanol-2, Äthanol.

10. Herstellungsverfahren nach Anspruch 9, dadurch gekennzeichnet, daß die besagte Verbindung bzw. die besagten Verbindungen in den folgenden Gewichtsverhältnissen im Verhältnis zu der Bezugsverbindung vorgesehen werden:
– Propanal zwischen 0,01 und 0,5,
– Anisol zwischen 0,01 und 0,5,
– Aceton zwischen 0,5 und 2,
– Propanol-1 zwischen 0,1 und 1,
– Butanol-2 zwischen 0,01 und 0,1
– Äthanol zwischen 1 und 10.

11. Herstellungsverfahren nach einem der Ansprüche 1 bis 10, dadurch gekennzeichnet, daß die Verbindungen in einem Lösungsmittel für Lebensmittelanwendungen verdünnt werden, das in der Lage ist, sie in einem homogenen oder heterogenen Medium, insbesondere Speiseöl, Wasser oder Äthanol zu dispergieren.

12. Herstellungsverfahren nach einem der Ansprüche 1 bis 10, dadurch gekennzeichnet, daß die Verbindung in einem flüssigen, ungiftigen Trägerstoff hoher Flüchtigkeit verdünnt werden, der in der Lage ist, sie in einem homogenen oder heterogenen Medium, insbesondere Stickstoffoxydul oder Trichlorfluormethan zu dispergieren.

13. Verfahren nach einem der Ansprüche 11 oder 12 zur Herstellung eines aromatischen Produkts für Lebensmittelanwendungen, dadurch gekennzeichnet, daß die Verbindungen in dem Lösungsmittel oder dem flüssigen Trägerstoff verdünnt werden, und zwar in einem Verdünnungsverhältnis nach Gewicht zwischen 50 und 10 000.

14. Herstellungsverfahren nach einem der Ansprüche 11, 12 oder 13, dadurch gekennzeichnet, daß die Verbindungen dem Lösungsmittel oder dem flüssigen Trägerstoff unter Rühren einzeln zugefügt werden.

15. Aromatisches Produkt mit dem Geruch und Geschmack von Schwarztrüffel, dadurch gekennzeichnet, daß es in konzentrierter Form Dimethylsulfid, Methyl-2-Butanal und vorzugsweise Acetaldehyd, Methyl-2-Propanal, Butanon-2, Methyl-2-Propanol und Methyl-2-Butanol enthält.

16. Aromatisches Produkt nach Anspruch 15, dadurch gekennzeichnet, daß es auch in konzentrierter Form eine oder mehrere Verbindungen der folgenden Gruppe enthält: Propanal, Anisol, Aceton, Propanol-1, Butanol-2, Äthanol.

17. Aromatisches Produkt mit dem Geruch und Geschmack von Schwarztrüffel, dadurch gekennzeichnet, daß es, in einem Lösungsmittel für Lebensmittelanwendungen oder in einem flüssigen Trägerstoff hoher Flüchtigkeit Dimethylsulfid, Methyl-2-Butanal und vorzugsweise Acetaldehyd, Methyl-2-Propanal, Butanon-2, Methyl-2-Propanol und Methyl-2-Butanol enthält.

18. Aromatisches Produkt nach Anspruch 17, dadurch gekennzeichnet, daß es auch, in dem Lösungsmittel oder flüssigen Trägerstoff verdünnt, eine oder mehrere Verbindungen der folgenden Gruppe enthält: Propanal, Anisol, Aceton, Propanol-1, Butanol-2, Äthanol.

19. Aromatisierter Körper, der einen Schwarztrüffelgeruch abgibt, dadurch gekennzeichnet, daß er ein festes oder flüssiges Substrat umfaßt, an dem Dimethylsulfid, Methyl-2-Butanal und vorteilhafterweise Acetaldehyd, Methyl-2-Propanal, Butanon-2, Methyl-2-Propanol und Methyl-2-Butanol absorbiert sind.

20. Aromatisierter Körper nach Anspruch 19, dadurch gekennzeichnet, daß auch eine oder mehrere der folgenden Verbindungen an dem Substrat absorbiert sind: Propanal, Anisol, Aceton, Propanol-1, Butanol-2, Äthanol.

## Claims

1. Process for manufacturing an aromatic product with the scent and taste of black truffle ("tuber melanosporum"), characterised in that it consists in linking the following two basic compounds: dimethylsulphide and methyl-2-butyraldehyde.

2. Manufacturing process according to claim 1, characterised in that the methyl-2-butyraldehyde is provided in a proportion by weight between 0.3 and 3 times the weight of dimethylsulphide considered as reference compound.

3. Manufacturing process according to one of claims 1 or 2, characterised in that one links with the basic compounds the following additional compound: acetaldehyde.

4. Manufacturing process according to one of claims 1 or 2, characaterised in that one links with the basic compounds the following additional compound: methyl-2-propanal.

5. Manufacturing process according to one of claims 1, 2 or 3, characterised in that one links with the basic compounds the following additional compound: butanone-2.

6. Manufacturing process according to one of claims 1, 2, 3 or 4, characterised in that one links with the basic compounds the following additional compound: methyl-2-propanol.

7. Manufacturing process according to one of claims 1, 2, 3, 4 or 5, characterised in that one links with the basic compounds the following additional compound: methyl-2-butanol.

8. Manufacturing process according to claims 3, 4, 5, 6 and 7 taken jointly, characterised in that:
   - the acetaldehyde is provided in a proportion by weight comprised between 0.4 and 4 times the weight of the reference compound,
   - the methyl-2-propanal is provided in a proportion by weight comprised between 0.5 and 5 times the weight of the reference compound,
   - the butanone-2 is provided in a proportion by weight comprised between 0.3 and 3 times the weight of the reference compound,
   - the methyl-2-propanol is provided in a proportion by weight comprised between 1 and 5 times the weight of the reference compound,
   - the methyl-2-butanol is provided in a proportion by weight comprised between 1 and 5 times the weight of the reference compound.

9. Manufacturing process according to one of the preceding claims, characterised in that one also links to the basic compounds and any additional compounds one or several compounds from the following group: propanal, anisole, acetone, propanol-1, butanol-2, ethanol.

10. Manufacturing process according to claim 9, characterised in that said compound or compounds are provided in the following proportions by weight relative to the reference compound:
   - propanal between 0.01 and 0.5,
   - anisole between 0.01 and 0.5,
   - acetone between 0.5 and 2,
   - propanol-1 between 0.1 and 1,
   - butanol-2 between 0.01 and 0.1,
   - ethanol between 1 and 10.

11. Manufacturing process according to one of claims 1 to 10, characterised in that the compounds are diluted in a food solvent capable of dispersing them in a homogeneous or heterogeneous medium, in particular food oil, water or ethanol.

12. Manufacturing process according to one of claims 1 to 10, characterised in that the compounds are diluted in a non-toxic liquid carrier of high volatility, capable of dispersing them in a homogeneous or heterogeneous medium, in particular nitrous oxide or trichlorofluoromethane.

13. Process according to one of claims 11 or 12 intended for manufacturing an aromatic product for use in connection with foodstuffs, characterised in that the compounds are diluted in the solvent or liquid carrier subject to a dilution rate by weight comprised between 50 and 10,000.

14. Manufacturing process according to one of claims 11, 12 or 13, characterised in that the compounds are individually incorporated in the solvent or liquid carrier subject to stirring.

15. Aromatic product with the scent and taste of black truffle, characterised in that it comprises, in concentrated form, dimethylsulphide, methyl-2-butyraldehyde and advantageously acetaldehyde, methyl-2-propanal, butanone-2, methyl-2-propanol and methyl-2-butanol.

16. Aromatic product according to claim 15, characterised in that it also comprises, in concentrated form, one or several compounds of the following group: propanal, anisole, acetone, propanol-1, butanol-2, ethanol.

17. Aromatic product with the scent and taste of black truffle, characterised in that it comprises, diluted in a solvent for use with foodstuffs or in a liquid carrier of high volatility, dimethylsulphide, methyl-2-butyraldehyde and advantageously acetaldehyde, methyl-2-propanal, butanone-2, methyl-2-propanol and methyl-2-butanol.

18. Aromatic product according to claim 17, characterised in that it also comprises, diluted in the solvent or liquid carrier, one or several compounds of the following group: propanal, anisole, acetone, propanol-1, butanol-2, ethanol.

19. Aromatised body emitting a scent of black truffle, characterised in that it comprises a solid or liquid substrate, on which is adsorbed dimethylsulphide, methyl-2-butyraldehyde and advantageously acetaldehyde, methyl-2-propanal, butanone-2, methyl-2-propanol and methyl-2-butanol.

20. Aromatised body according to claim 19, characterised in that also one or several of the following compounds are adsorbed on the substrate: propanal, anisole, acetone, propanol-1, butanol-2, ethanol.